# EUROPÄISCHE PATENTSCHRIFT

(11) **EP 3 178 043 B1**
(45) Veröffentlichungstag und Bekanntmachung des Hinweises auf die Patenterteilung: **21.07.2021**
(21) Anmeldenummer: 15752989.2
(22) Anmeldetag: 07.08.2015
(51) Int. Cl.: G06Q 10/08, G06Q 30/06, B65G 1/137, A47F 11/10, H05B 47/155

(54) **REGALBELEUCHTUNGSSYSTEM UND VERFAHREN ZUM AUFFINDEN VON WAREN UND VERWALTEN VON PREISINFORMATIONEN**
SHELF LIGHTING SYSTEM AND METHOD FOR LOCATING PRODUCTS AND MANAGING PRICING INFORMATION
SYSTÈME D'ÉCLAIRAGE D'ÉTAGÈRE ET PROCÉDÉ SERVANT À LOCALISER DES MARCHANDISES ET À GÉRER DES INFORMATIONS DE PRIX

(30) Priorität: 07.08.2014 DE 102014215629
(43) Veröffentlichungstag der Anmeldung: 14.06.2017
(73) Patentinhaber: Zumtobel Lighting GmbH, 6850 Dornbirn (AT)
(72) Erfinder: JOPPI, Rene, A-6850 Dornbirn (AT); MAYR, Gregor, A-Dornbirn 6850 (AT)
(74) Vertreter: Kiwit, Benedikt
(86) Internationale Anmeldenummer: PCT/EP2015/068260
(87) Internationale Veröffentlichungsnummer: WO 2016/020527

(56) Entgegenhaltungen:
- DE-A1-102013 104 365
- US-A1- 2004 088 229
- US-A1- 2006 008 277
- US-A1- 2010 049 635
- US-B1- 8 423 431

## Beschreibung

Die Erfindung betrifft ein Beleuchtungssystem, ein Verfahren zum Bereitstellen eines Beleuchtungssystems und ein Verfahren zum Auffinden eines Produkts.

Das Auffinden von Waren in größeren Einkaufsflächen, beispielsweise in Regalflächen von Supermärkten, ist aufgrund einer hohen Warenvielfalt häufig sehr unübersichtlich, so dass der Kunde, selbst wenn er sich bereits in dem richtigen Gang und vor dem richtigen Regal befindet, die Ware teils nur unter Mühe auffinden kann. Dies verursacht eine negative Einkaufserfahrung und bindet darüber hinaus Arbeitszeit des Personals, welche für Fragen der Kunden nach Produktstandorten aufgewendet wird.

Die internationale Patentanmeldung WO 2006/126114 A1 zeigt ein herkömmliches Regalbeleuchtungssystem, welches zwar geeignet ist, die in den Regalen bereitgestellten Produkte übersichtlich zu beleuchten, jedoch zu einer besseren Auffindbarkeit der Produkte darüber hinaus nicht beiträgt.

Die Patentanmeldung US 2010/049635 A1 offenbart ein Produktauffindungssystem, in welchem Produkte in Hängern in einem Regal angeordnet sind und an Hängern angebrachte Leuchtdioden aufleuchten um ausgewählte Produkte anzuzeigen.

Die Patentanmeldung US 2004/088229 Aloffenbart ein Pick-to-Light System, in welchem Leuchteneinheiten an der Vorderseite eines Produktregals in einem einer Produktkategorie zugeordneten Bereich angebracht werden und basierend auf einer Produktbestellung die aufzufindenden Produkte der Bestellung mittels Signalisierungen der entsprechenden Leuchteneinheiten gefunden werden können.

Die Patentanmeldung US 2006/008277 A1 offenbart ein optisches Kommunikationssystem für elektronische Preisschilder, die neben Produkten eines Verkaufsregals angebracht sind. Die Preisschilder empfangen Daten über kodierte optische Signale, die von einem Handterminal ausgesendet werden.

Die Patentanmeldung US 8 423 431 B1 offenbart ein Produktauffindungssystem, in welchem nach einer Produktauswahl ein Lichtstrahl einer Leuchteneinheit auf einem dem Produkt zugeordneten Bereich gerichtet wird.

Die Patentanmeldung DE 10 2013 104365 A1 offenbart eine Beleuchtungseinrichtung, die Leuchteneinheiten umfasst, die für das Beleuchten und Auffinden von Produkten in einem Kühlregal verwendet werden.

Der vorliegenden Erfindung liegt somit die Aufgabe zu Grunde, ein Beleuchtungssystem und ein Verfahren zum Bereitstellen eines Beleuchtungssystems zu schaffen, welche ein einfaches Auffinden gewünschter Produkte ermöglichen.

Die Aufgabe wird erfindungsgemäß durch die Merkmale der unabhängigen Ansprüche gelöst. Vorteilhafte Weiterbildungen sind Gegenstand der hierauf rückbezogenen Unteransprüche.

Ein erfindungsgemäßes Beleuchtungssystem, insbesondere ein Regalbeleuchtungssystem, dient dem Auffinden von Produkten. Es beinhaltet zumindest zwei Leuchteneinheiten, wobei jeweils eine Leuchteneinheit oder eine definierte Gruppe von Leuchteneinheiten jeweils einem anderen räumlichen Bereich, insbesondere einer Regalfläche, zugeordnet ist. Darüber hinaus beinhaltet das Beleuchtungssystem eine Steuereinheit zum Ansteuern der Leuchteneinheiten, wobei jeder Leuchteneinheit oder definierten Gruppe von Leuchteneinheiten eine andere Leuchtenadressierung zugeordnet ist. Dabei ist die Leuchtenadressierung jeweils mit einer Produktzuordnung verknüpft, welche eindeutig einem in dem zugeordneten räumlichen Bereich vorgesehenen Produkt zugeordnet ist. Darüber hinaus weist das Beleuchtungssystem eine Benutzerschnittstelle auf, welche zur Anzeige der Produktzuordnung und zur Auswahl der anzusteuernden Leuchteneinheit oder definierten Gruppe von Leuchteneinheiten über die angezeigte Produktzuordnung dient. So ist es möglich, durch Auswahl des aufzufindenden Produkts mittels der Benutzerschnittstelle ein Aufleuchten der bei dem Produkt angeordneten Leuchteneinheit zu erreichen und somit das Produkt mit sehr geringem Aufwand aufzufinden.

Vorzugsweise weist dabei die Benutzerschnittstelle eine stationäre Bedieneinheit und/oder eine mobile Bedieneinheit, wie z.B. ein Mobiltelefon oder Tablet, auf. Die stationäre und/oder mobile Bedieneinheit dient dabei der Anzeige der Produktzuordnung und zur Auswahl der anzusteuernden Leuchteneinheit oder definierten Gruppe von Leuchteneinheiten über die angezeigte Produktzuordnung. Mittels einer stationären Bedieneinheit kann somit ohne weitere Voraussetzungen eine Bedienung durch Kunden des Geschäfts ermöglicht werden. Durch eine mobile Bedieneinheit wird zwar ein erhöhter Aufwand erzeugt, dies ist jedoch nicht kritisch, da die meisten Besucher eines Geschäfts ohnehin über ein Mobiltelefon verfügen. Die mobile Bedieneinheit ermöglicht darüber hinaus eine gleichzeitige Bedienung durch mehrere Nutzer und eine Bedienung von verschiedenen Standorten aus.

Vorzugsweise ist die Steuereinheit ausgebildet, um bei Auswahl eines Produkts mittels der Benutzerschnittstelle, die gemäß der Produktzuordnung und Leuchtenadressierung zugeordnete Leuchteneinheit oder definierte Gruppe von Leuchteneinheiten derart anzusteuern, dass diese für einen vorbestimmten Zeitraum in einer vorbestimmten Farbe und/oder Intensität und/oder einem Blinkmuster und/oder mit einem Intensitätswechsel und/oder mit einem Farbwechsel aufleuchtet. So ist ein sehr einfaches Auffinden des Produkts gewährleistet.

In einer vorteilhaften Weiterbildung ist die Benutzerschnittstelle ausgebildet, um gleichzeitig oder nacheinander eine Auswahl eines ersten Produkts durch einen ersten Nutzer und eine Auswahl eines zweiten Produkts durch einen zweiten Nutzer usw. zu verarbeiten. Es kann also eine beliebige Anzahl an Nutzern eine beliebige Anzahl an Produkten auswählen. Die Steuereinheit ist vorzugsweise ausgebildet, um die gemäß der Produktzuordnung und Leuchtenadressierung dem ersten Produkt zugeordnete Leuchteneinheit oder definierte Gruppe von Leuchteneinheiten derart anzusteuern, dass diese mit einer ersten Intensität und/oder einem ersten Blinkmuster und/oder in einer ersten Farbe und/oder mit einem ersten Intensitätswechsel und/oder mit einem ersten Farbwechsel für einen ersten vorbestimmten Zeitraum aufleuchtet, und um die gemäß der Produktzuordnung und Leuchtenadressierung dem zweiten Produkt zugeordnete Leuchteneinheit oder definierte Gruppe von Leuchteneinheiten derart anzusteuern, dass diese mit einer zweiten Intensität und/oder einem zweiten Blinkmuster und/oder in einer zweiten Farbe und/oder mit einem zweiten Intensitätswechsel und/oder mit einem zweiten Farbwechsel für einen zweiten vorbestimmten Zeitraum aufleuchtet. Dabei sind die Farben, Intensitäten, Blinkmuster, Intensitätswechsel, Farbwechsel, etc. unterschiedlich. So ist es mittels des Beleuchtungssystems möglich, mehr als einem Nutzer gleichzeitig sein gesuchtes Produkt anzuzeigen; mithin können sich der erste, zweite, usw. vorbestimmte Zeitraum überlappen. Selbstverständlich können auch mehr als zwei verschiedene Produkte gleichzeitig über unterschiedliche Farben, Blinkmuster, etc. angezeigt werden. Es ist auch denkbar, dass bei Ausgabe bspw. eines identischen Lichtsignals die vorbestimmten Zeiträume nur nacheinander ablaufen. In einer nicht erfindungsgemäßen Ausführungsform ist es denkbar, dass die optischen Signale durch akustische Signale begleitet werden.

Vorzugsweise ist die Steuereinheit ausgebildet, um durch modulierte Lichtsignale der zumindest einen Leuchteneinheit oder definierten Gruppe von Leuchteneinheiten Informationen auszusenden. So können ohne weitere aufwendige Hilfsmittel, wie Sender, Informationen übermittelt werden.

Das Beleuchtungssystem verfügt darüber hinaus über zumindest ein elektronisches Etikett, welches in einer Sichtlinie zu zumindest einer Leuchteneinheit oder definierten Gruppe von Leuchteneinheiten angebracht ist. Das elektronische Etikett ist dabei ausgebildet, um von der (ihm zugeordneten) Leuchteneinheit oder definierten Gruppe von Leuchteneinheiten modulierte Lichtsignale zu empfangen. Das elektronische Etikett ist dabei ausgebildet, um anhand der modulierten Lichtsignale der zumindest einen Leuchteneinheit oder definierten Gruppe von Leuchteneinheiten, die Informationen zurückzugewinnen. Das elektronische Etikett ist in diesem Fall ausgebildet, um die Information anzuzeigen. So ist eine Interaktion mit dem elektronischen Etikett möglich, ohne eine Verkabelung des elektronischen Etiketts zu benötigen. Weiterhin können so z.B. Preisinformationen oder Inhaltsstoff-Informationen oder Verfallsdatums-Informationen an das elektronische Etikett übertragen und von diesem ausgegeben werden.

Vorzugsweise ist das elektronische Etikett darüber hinaus mit einer Solarzelle ausgestattet, welche ausgebildet ist, um von der zumindest einen Leuchteneinheit oder definierten Gruppe von Leuchteneinheiten abgestrahltes Licht zu empfangen und in elektrischen Strom umzusetzen. Dabei verfügt das Etikett vorzugsweise über keine weitere externe Energiequelle. So ist es möglich, auch die Energieversorgung des elektronischen Etiketts mittels des übrigen Beleuchtungssystems ohne Verkabelung des elektronischen Etiketts zu bewerkstelligen.

Falls die Benutzerschnittstelle über eine mobile Bedieneinheit verfügt, ist diese vorzugsweise ausgebildet, um die modulierten Lichtsignale zu empfangen und die darin enthaltenen Informationen zurückzugewinnen. So kann die Information direkt auf einem tragbaren Gerät ausgegeben werden.

Bevorzugt ist die mobile Bedieneinheit ausgebildet, um anhand der Informationen zu ermitteln, ob die mobile Bedieneinheit ein Produkt einer ausgewählten Produktzuordnung erreicht hat. Die mobile Bedieneinheit ist dann ausgebildet, um anzuzeigen, dass die mobile Bedieneinheit das ausgewählte Produkt erreicht hat und/oder um an die Steuereinheit zu übermitteln, dass die mobile Bedieneinheit das ausgewählte Produkt erreicht hat. Die Steuereinheit ist dabei ausgebildet, um eine Ansteuerung der anzusteuernden Leuchteneinheit oder definierten Gruppe von Leuchteneinheiten zu beenden, wenn die mobile Bedieneinheit meldet, dass sie das ausgewählte Produkt erreicht hat. So kann die Anzeigefunktion des Beleuchtungssystems, sobald ein Nutzer erfolgreich zu seinem ausgewählten Produkt geführt wurde, ohne Zeitverzug von einem anderen Nutzer genutzt werden.

Die mobile Bedieneinheit ist vorzugsweise ausgebildet, um anhand der empfangenen Informationen eine Richtung und/oder Position des ausgewählten Produkts zu ermitteln, und eine Zielführung zu dem ausgewählten Produkt anzuzeigen. So kann das Auffinden des Produkts zusätzlich erleichtert werden.

Bevorzugterweise weist das Beleuchtungssystem zumindest einen Sensor auf, welcher ausgebildet ist, um zu ermitteln, ob ein Nutzer einen räumlichen Bereich eines Produkts einer ausgewählten Produktzuordnung erreicht hat, und dies an die Steuereinheit zu melden. Die Steuereinheit ist dann ausgebildet, um eine Ansteuerung der anzusteuernden Leuchteneinheit oder definierten Gruppe von Leuchteneinheiten zu beenden, wenn der Sensor meldet, dass der Nutzer den räumlichen Bereich erreicht hat. So kann die Dauer der gezielten Beleuchtung eines Produkts für einen anfragenden Nutzer weiter reduziert werden. Dies erhöht die Verfügbarkeit des Systems.

Bevorzugt ist die Steuereinrichtung ausgebildet, um die Produktzuordnung basierend auf einer manuellen Nutzereingabe mittels der Benutzerschnittstelle und/oder basierend auf einem Einlesen eines auf dem Produkt angebrachten Strichcodes und/oder eines an dem Beleuchtungssystem angebrachten Strichcodes und/oder basierend auf einem Einlesen eines auf dem Produkt angebrachten RFID-Transponders und/oder eines an dem Beleuchtungssystem angebrachten RFID-Transponders vorzunehmen. So kann sehr flexibel und einfach die Produktzuordnung hergestellt werden.

Ein erfindungsgemäßes Verfahren dient dem Bereitstellen eines Beleuchtungssystems insbesondere eines Regalbeleuchtungssystems, zum Auffinden von Produkten. Das Verfahren weist die folgenden Schritte auf:
- Bereitstellen zumindest zweier Leuchteneinheiten, wobei jeweils eine Leuchteneinheit oder eine definierte Gruppe von Leuchteneinheiten einem anderen räumlichen Bereich, insbesondere einer Regalfläche zugeordnet sind,
- Zuordnen einer Leuchtenadressierung zu einer Leuchteneinheit oder definierten Gruppe von Leuchteneinheiten in einer Steuereinheit zum Ansteuern der Leuchteneinheiten,
- Verknüpfen der Leuchtenadressierung mit einer Produktzuordnung, welche eindeutig einem in dem zugeordneten räumlichen Bereich vorgesehenen Produkt zugeordnet ist, und
- Anzeigen der Produktzuordnung über eine Benutzerschnittstelle.

So ist es möglich, mittels der Benutzerschnittstelle auf die in dem entsprechenden Regal verfügbaren Produkte zuzugreifen.

Vorteilhafterweise dient das Verfahren dem Auffinden eines Produktes und umfasst die Auswahl einer Leuchteneinheit oder definierten Gruppe von Leuchteneinheiten über die angezeigte Produktzuordnung und die Ansteuerung der ausgewählten Leuchteneinheit oder definierten Gruppe von Leuchteneinheiten mittels der Steuereinheit. So kann einfach über die Benutzerschnittstelle auf ein gesuchtes Produkt zugegriffen werden, welches anschließend durch Beleuchtung des entsprechenden Bereichs des Regals hervorgehoben wird.

Nachfolgend wird die Erfindung anhand der Zeichnungen, in denen ein vorteilhaftes Ausführungsbeispiel der Erfindung dargestellt ist, beispielhaft beschrieben. In den Zeichnungen zeigen:
- Fig. 1: ein erstes Ausführungsbeispiel des erfindungsgemäßen Beleuchtungssystems in zwei unterschiedlichen Ansichten;
- Fig. 2: ein zweites Ausführungsbeispiel des erfindungsgemäßen Beleuchtungssystem in einem Blockschaltbild, und
- Fig. 3: ein Ausführungsbeispiel des erfindungsgemäßen Verfahrens in einem Flussdiagramm.

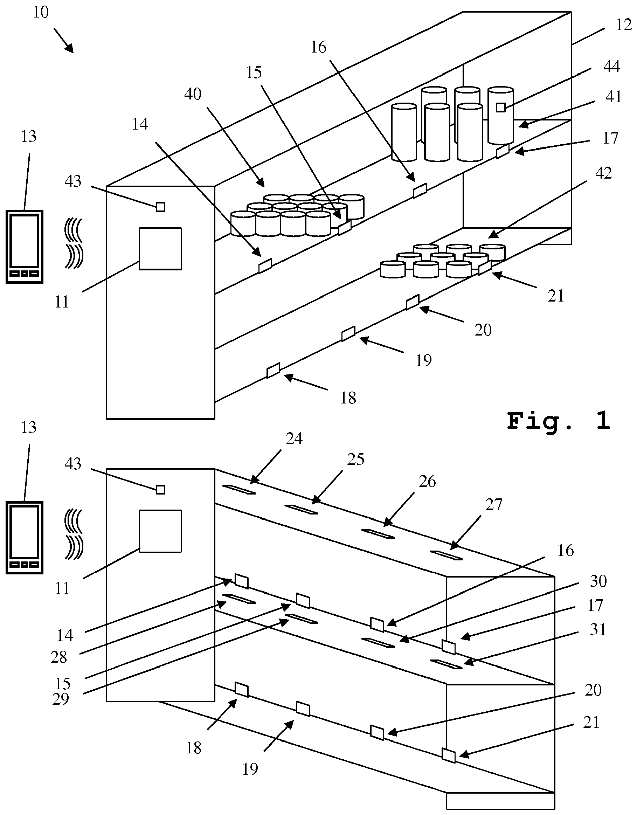

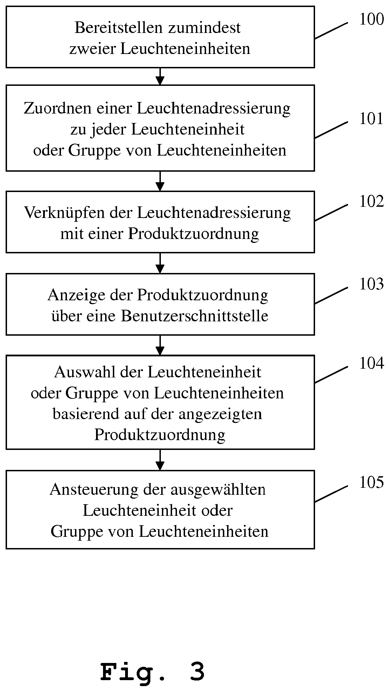

Zunächst wird anhand der Fig. 1-2 der Aufbau und die generelle Funktionsweise unterschiedlicher Ausführungsbeispiele des erfindungsgemäßen Beleuchtungssystems erläutert. Anschließend wird mittels Fig. 3 auf die Funktionsweise eines Ausführungsbeispiels des erfindungsgemäßen Verfahrens eingegangen. Identische Elemente wurden in ähnlichen Abbildungen zum Teil nicht wiederholt dargestellt und beschrieben.

In Fig. 1 ist ein Ausführungsbeispiel des erfindungsgemäßen Beleuchtungssystems 10 dargestellt. Das Beleuchtungssystem 10 beinhaltet hier ein Steuergerät 11, welches an der Stirnseite eines Regals 12 montiert ist. Das Regal 12 verfügt vorzugsweise über elektronische Etiketten 14, 15, 16, 17, 18, 19, 20 und 21, welche jeweils in bestimmten Bereichen des Regals 12 angebracht sind. Darüber hinaus verfügt das Regal 12 über Leuchteneinheiten 24, 25, 26, 27, 28, 29, 30 und 31, welche ebenfalls jeweils einem dieser Bereiche zugeordnet sind und diesen Bereich beleuchten. Jeder einzelnen der Leuchteneinheiten 24-31 oder definierten Gruppen von Leuchteneinheiten 24-31 ist dabei eine Leuchtenadressierung zugeordnet. Jede Leuchtenadressierung ist dabei einem Produkt mittels Verknüpfung zu einer Produktzuordnung zugeordnet. Zur Adressierung der Leuchten kann dabei eine DMX-Adressierung genutzt werden. Dies hat den Vorteil, dass lediglich eine erste Adresse vergeben werden muss, und sich die restlichen Adressen automatisch ergeben.

Es ist dabei nicht nötig, jedem einzelnen Produkt eine einzelne Leuchteneinheit zuzuordnen. Vielmehr können auch größere Bereiche mit einer gemeinsamen Leuchteneinheit beleuchtet werden. Auch die Anzeige des ungefähren Bereichs, in welchem sich das gesuchte Produkt befindet, stellt bereits eine erhebliche Hilfe für den Kunden dar.

In der oberen in Fig. 1 dargestellten Ansicht sind darüber hinaus in einzelnen der Bereiche Waren 40, 41, 42 dargestellt. Eine der Waren 41 ist dabei mit einem Strichcode 44 ausgestattet. Darüber hinaus ist an dem Regal 12 neben dem Bediengerät 11 ein Strichcode 43 angebracht. Das hier dargestellte Beleuchtungssystem 10 verfügt darüber hinaus über ein Mobilfunkgerät 13, welches drahtlos mit dem Bediengerät 11 kommuniziert. Mobilfunkgerät 13 sowie Bediengerät 11 können beide im Rahmen der Erfindung als Benutzerschnittstelle ausgebildet sein.

Ein Nutzer, welcher ein Produkt in dem Regal 12 auffinden möchte, interagiert mit dem Bediengerät 11. Dabei kann er sich auf einem Bildschirm des Bediengeräts 11 in dem jeweiligen Regal 12 verfügbare Waren 40-42 anzeigen lassen. Durch Auswahl des Produkts mittels des Bediengeräts 11 wird somit anhand der Produktzuordnung die anzusteuernde Leuchteneinheit bzw. Gruppe von Leuchteneinheiten ermittelt und angesteuert. Die Ansteuerung erfolgt dabei mittels der zuvor festgelegten Leuchtenadressierung. Durch Auswahl eines der Produkte 40-42 über die zuvor festgelegte Produktzuordnung, welche an dem Bediengerät 11 angezeigt wird, löst der Nutzer dabei ein definiertes Aufleuchten einer Leuchteneinheit 24-31 in einem Bereich, welcher der entsprechenden Ware 40-42 zugeordnet ist, aus. Das Aufleuchten kann dabei in einer vorgegebenen oder vom Nutzer einstellbaren Farbe oder Leuchtintensität erfolgen. Dabei ist ein dauerhaftes Aufleuchten für einen vorbestimmten Zeitraum aber auch ein Aufleuchten mit einem Blinkmuster möglich. Die Farbe, Intensität, Leuchtdauer und ein Blinkmuster können dabei voreingestellt oder vom Nutzer einstellbar sein.

In einer nicht erfindungsgemäßen Ausführungsform kann anstatt einer einzelnen Leuchteneinheit auch eine Mehrzahl von Leuchteneinheiten und damit eine Mehrzahl von Leuchtenadressierungen einem Produkt zugeordnet sein. Dies ist insbesondere dann relevant, wenn eine große Menge eines identischen Produkts einen größeren Abschnitt eines Regals 12 belegt. In diesem Fall kann eine definierte Gruppe von Leuchteneinheiten als Reaktion auf die Auswahl eines Produkts angesteuert werden. Hierzu wird die entsprechende Produktzuordnung mit der entsprechenden Anzahl an Leuchtenadressierungen in einer Steuereinheit verknüpft und entsprechend bereitgestellt.

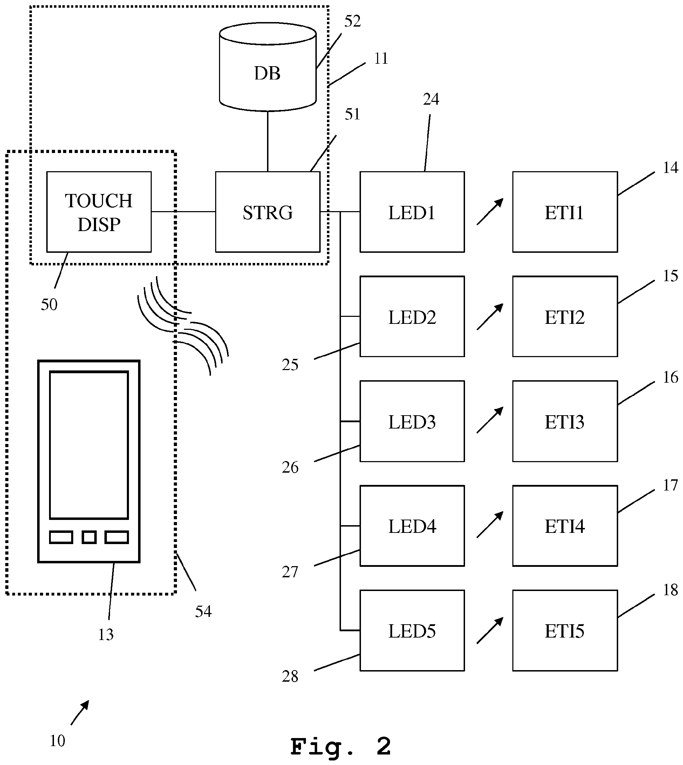

Bei einer direkten Bedienung des Beleuchtungssystems 10 mittels des Bediengeräts 11 verfügt das Bediengerät 11 über eine stationäre Bedieneinheit. Hierauf wird anhand von Fig. 2 näher eingegangen.

Alternativ oder zusätzlich zu einer direkten Bedienung über das Bediengerät 11, ist darüber hinaus eine Bedienung über eine mobile Bedieneinheit 13, wie z.B. ein Mobiltelefon oder Tablet möglich. In diesem Fall werden die Produkte auf einem Bildschirm der mobilen Bedieneinheit 13 dargestellt und können ausgewählt werden. Wird ein Produkt ausgewählt, so wird dies dem Bediengerät bzw. Steuergerät 11 mitgeteilt, welches analog dem oben beschriebenen Vorgang eine Ansteuerung der Beleuchtung im Bereich des entsprechenden Produkts durchführt. Die Kommunikation zwischen dem Mobiltelefon 13 und dem Bediengerät 11 kann dabei entweder direkt über ein in dem Geschäft angebrachtes drahtloses Funknetzwerk, z.B. WLAN, erfolgen. Auch eine Kommunikation über Bluetooth oder NFC ist denkbar.

Da ein Mobilfunkgerät 13 üblicherweise nicht mit einer speziellen hierfür notwendigen Software ausgestattet ist, ist an dem Regal 12 zusätzlich ein Strichcode 43 angebracht, welcher als Verknüpfung zu einer entsprechenden Software, beispielsweise einer Applikation für ein Mobiltelefon, dient. Durch ein Einlesen des Strichcodes 43 mittels des Mobiltelefons 13 wird das Mobiltelefon 13 in die Lage versetzt, die entsprechende Software z.B. aus dem Internet runter zu laden und auszuführen.

Bei den Strichcodes 43, 44 kann es sich um lineare Strichcodes aber auch um zweidimensionale Strichcodes, wie z.B. QR-Codes, handeln. Anstatt eines Strichcodes 43 kann an dieser Stelle selbstverständlich auch ein Hyperlink in textueller Form angegeben sein. Darüber hinaus ist es denkbar, mittels Bluetooth oder Near Field Communication (NFC) die Software direkt an diesem Ort bereitzustellen.

Eine Produktzuordnung, welche der Zuordnung der entsprechenden Produkte zu den Leuchtenadressierungen entspricht, kann dabei manuell durchgeführt werden. Dies erfordert jedoch einen großen Personalaufwand. Alternativ kann z.B. mittels eines Barcodelesers oder eines Mobiltelefons oder Tablets der Strichcode 44 auf den Waren 40, 41 und 42 gescannt werden, um das entsprechende Produkt auszuwählen. Nach einer solchen Produktauswahl kann eine entsprechende Regalposition oder Leuchtenadressierung manuell eingegeben werden, um Leuchtenadressierung(en) und Produktzuordnung(en) zu verknüpfen.

Alternativ können ähnliche Strichcodes darüber hinaus an den Regalpositionen angebracht sein. Der Bedienvorgang zur Zuweisung einer Leuchtenadressierung zu einem Produkt wäre somit ein nacheinander scannen des Strichcodes des Bereichs des Regals 12 und des Strichcodes 44 des Produkts 41. An Stelle von Strichcodes können auch RFID-Tags verwendet werden.

Wollen nun mehrere Kunden gleichzeitig das Beleuchtungssystem nutzen, so ergibt sich die Schwierigkeit einer Uneindeutigkeit des beleuchteten Produkts. Dies kann dadurch aufgelöst werden, dass den von den jeweiligen Nutzern ausgewählten Produkten unterschiedliche Farben oder Blinkmuster der Beleuchtung zugeordnet werden. In einer nicht beanspruchten Ausführungsform ist es möglich, dass das Beleuchtungssystem 10 - solange ein Benutzer es benutzt - weitere Eingaben durch andere Nutzer ignoriert.

Weiterhin ist eine priorisierte Behandlung der Kundenanfragen zur Auffindung von Produkten denkbar. So könnten beispielsweise die Kunden nach ihrer Bedienreihenfolge priorisiert werden. Alternativ könnten sie nach ihrem vergangenen Käuferverhalten priorisiert werden. Auch eine Priorisierung nach Notwendigkeit ist denkbar. So könnten z.B. sehbehinderte Kunden bevorzugt von dem System behandelt werden.

Darüber hinaus ist das Beleuchtungssystem 10 nicht auf ein einzelnes Regal 12 beschränkt. Beispielsweise könnte ein eigenes Bediengerät 11 für jeden Gang in einem Geschäft vorgesehen sein. Auch ein zentrales Bediengerät, an welchem dem Kunden nach seiner Produktauswahl ein aufzusuchender Gang angezeigt wird, ist als zusätzliche Erweiterung des Beleuchtungssystems 10 denkbar.

Als weitere Ausführungsform ist es beispielsweise denkbar, dass insbesondere mobile Bedienelemente, wie beispielsweise Smartphones, auch zur geographischen Zuordnung des Kunden bezüglich des aufzusuchenden Produkts herangezogen werden. So können beispielsweise aufgrund über die Leuchteneinheiten abgegebener pulsierender Signale diese von den mobilen Bediengerät erfasst werden und somit eine räumliche Zuordnung der Person in dem Supermarkt bezüglich des Regals festgestellt werden. Davon ausgehend kann beispielsweise der Kunde durch visuelle oder akustische Ausgabe zu dem Produkt geführt werden. Auch denkbar sind andere geographische Zuordnungsmöglichkeiten, wie beispielsweise Bewegungssensoren, welche eine genaue Position des Kunden im Supermarkt erfassen und den Kunden dann zu der zuvor angesprochenen Ware oder Warengruppe führen.

In einer weiteren Ausgestaltung des Beleuchtungssystems 10 sind die elektronischen Etiketten 14-21 dabei in den jeweils einzeln beleuchtbaren Bereichen des Regals 12 angeordnet. D.h. jeder Leuchteneinheit 24-31 ist dabei ein elektronisches Etikett 14-21 zugeordnet. Die elektronischen Etiketten 14-21 sind dabei vorzugsweise nicht mit dem Beleuchtungssystem 10 verkabelt, sondern stehen lediglich über das von den Leuchteneinheiten 24-31 abgestrahlte Licht in Kontakt mit dem Beleuchtungssystem 10. D.h. über Visible Light Communication werden Informationen von dem Beleuchtungssystem 10 mittels der Leuchteneinheiten 24-31 an die elektronischen Etiketten 14-21 übertragen. Hierzu verfügt jedes elektronische Etikett über einen Lichtempfänger. Bei den Informationen handelt es sich dabei beispielsweise um Produktinformationen und/oder Preisinformationen und/oder Inhaltsstoffinformationen und dergleichen.

Darüber hinaus ist zusätzlich eine Energieversorgung der elektronischen Etiketten 14-21 mittels der Leuchteneinheiten 24-31 möglich. In diesem Fall verfügen die elektronischen Etiketten 14-21 jeweils über eine Solarzelle, über welche sie mit Energie versorgt werden. Eine zusätzliche Energieversorgung in drahtgebundener Form oder in Form einer Batterie ist somit nicht nötig. Zur Überbrückung von Stromausfällen oder während die Beleuchtung über Nacht abgeschaltet ist, können die elektronischen Etiketten darüber hinaus mit einem Akkumulator ausgestattet sein.

Wird eine niedrige Datenübertragungsrate in Kauf genommen, so kann die Solarzelle als Lichtsensor genutzt werden.

Auf diese Art und Weise können über die elektronischen Etiketten 14-21 Preisinformationen, Haltbarkeitsdatums-Informationen, Inhaltsstoff-Informationen, etc. zu den Produkten 40, 41 und 42 angezeigt werden. Da die räumliche Zuordnung der Produkte 40-42 zu den Bereichen des Beleuchtungssystems bereits verfügbar ist, können somit die zusätzlichen Informationen, die einzelnen Produkte betreffend, ohne weiteren Bedienaufwand auf den elektronischen Etiketten 14-21 angezeigt werden.

In einer weiteren vorteilhaften Ausgestaltung verfügen die Produkte über Transponder, z.B. RFID-Tags. In diesem Fall verfügt auch das Beleuchtungssystem 10, insbesondere das Regal 12, über entsprechende Empfänger in den einzelnen Bereichen, welche den Leuchteneinheiten 24-31 zugeordnet sind. So kann automatisch die Zuordnung der Produkte zu den entsprechenden Bereichen in dem Regal 12 durchgeführt werden. Eine manuelle Verknüpfung des Produkts und des Bereichs ist in diesem Fall nicht länger notwendig. Durch Nutzung der RFID-Tags kann insbesondere falsch einsortierte Ware sehr einfach gefunden werden.

Weiterhin kann das erfindungsgemäße Beleuchtungssystem eingesetzt werden, um die Lagerhaltung in den Regalen 12 zu vereinfachen. So kann ein Nutzer, z.B. das Bedienpersonal, da die Zuordnung der Ware zu den einzelnen Bereichen bereits verfügbar ist, mittels des Bediengeräts 11 oder eines Mobiltelefons 13 Produkte anzeigen lassen, deren Haltbarkeitsdatum nahezu überschritten oder überschritten ist. Dies vereinfacht signifikant das Aussortieren entsprechender Waren. Auch kann das System eingesetzt werden, um das Einräumen der Regale 12 zu vereinfachen. So kann das Bedienpersonal das entsprechende Produkt am Bediengerät 11 oder Mobiltelefon 13 auswählen und bekommt angezeigt, an welcher Stelle Nachschub des entsprechenden Produkts in das Regal 12 eingeräumt werden muss.

In Fig. 2 ist ein zweites Ausführungsbeispiel des erfindungsgemäßen Beleuchtungssystems 10 gezeigt, welches sich auch auf das erste Ausführungsbeispiel gemäß Fig. 1 übertragen lässt. Das Beleuchtungssystem 10 verfügt über ein Bediengerät 11, welches eine Steuereinheit 51, eine stationäre Bedieneinheit 50, beispielsweise einen berührungsempfindlichen Bildschirm, und eine Datenbank 52 verfügt.

In der Datenbank 52 sind dabei Zuordnungen von Leuchteneinheiten zu Produkten bzw. Bereichen gespeichert. Mittels der stationären Bedieneinheit 50 können Bedienvorgänge ausgelöst werden. Auf einer Anzeige der stationären Bedieneinheit 50 werden dabei die in dem jeweiligen Regal angeordneten Produkte dargestellt. Mittels der stationären Bedieneinheit 50 kann eines der Produkte ausgewählt werden. Aus der Datenbank 52 wird nun die entsprechende Zuordnung des Produkts zu dem Bereich innerhalb des Regals und damit zu der mit der Produktzuordnung verknüpften Leuchtenadresse ausgelesen. Die Steuereinheit 51 wiederum ist mit Leuchteneinheiten 24-28, in diesem Beispiel LED-Modulen, verbunden. Jeder Leuchteneinheit ist, wie anhand von Fig. 1 beschrieben, eine Leuchtenadresse zugeordnet. Als Reaktion auf die Auswahl eines Produkts wird somit die entsprechende Leuchteneinheit oder Gruppe von Leuchteneinheiten angesteuert. Darüber hinaus sind hier elektronische Etiketten 14-18 dargestellt, welche jeweils im Sichtbereich einer der Leuchteneinheiten 24-28 angeordnet ist.

Bei der stationären Bedieneinheit 50 kann es sich beispielsweise um einen berührungsempfindlichen Bildschirm handeln. Alternativ kann ein Trackball oder eine Maus oder eine Gestenerkennung in Zusammenhang mit einem (nicht berührungsempfindlichen) Bildschirm eingesetzt werden.

Die Datenbank 52 muss dabei nicht räumlich innerhalb des Bediengeräts 11 angeordnet sein. Auch eine zentrale Datenbank, welche mehrere Regale versorgt und damit mit mehreren Bedieneinheiten verbunden ist, kann eingesetzt werden. Ebenso verhält es sich mit der Steuereinheit 51.

Anstelle oder zusätzlich zu einer Bedienung mittels der stationären Bedieneinheit 50 kann die Bedienung auch mittels einer mobilen Bedieneinheit 13, beispielsweise einem Mobiltelefon oder einem Tablet erfolgen. Die stationäre Bedieneinheit 50 und die mobile Bedieneinheit 13 werden hier gemeinsam als Benutzerschnittstelle 54 bezeichnet. Die Benutzerschnittstelle 54 muss dabei nicht beide Optionen beinhalten. Die Benutzerschnittstelle kann eine stationäre Bedieneinheit 50 und/oder eine mobile Bedieneinheit 13 aufweisen.

In Fig. 3 ist ein Ausführungsbeispiel des erfindungsgemäßen Verfahrens dargestellt. In einem ersten Schritt 100 werden zumindest zwei Leuchteneinheiten bereitgestellt. In einem zweiten Schritt 101 wird jeder Leuchteneinheit eine Leuchtenadressierung zugeordnet. Alternativ oder zusätzlich kann auch einer Gruppe von Leuchteneinheiten eine Leuchtenadressierung zugeordnet werden. In einem dritten Schritt 102 werden die Leuchtenadressierungen mit Produkt(zuordnung)en verknüpft. D.h. es besteht nun eine eindeutige Zuordnung zwischen den Leuchtenadressierungen und den Produkten. Da die Leuchtenadressierungen eindeutig den jeweiligen Leuchten bzw. Gruppen von Leuchten zugeordnet sind, und die Positionen der Leuchten bzw. Gruppen von Leuchten fest sind, entspricht die Zuordnung somit einer Zuordnung der Produkte zu ihren Standorten.

In einem vierten Schritt 103 wird die Produktzuordnung mittels einer Benutzerschnittstelle angezeigt. D.h. ein Nutzer hat die Möglichkeit, die in einem jeweiligen Regal vorhandenen Produkte einzusehen. In einem fünften Schritt 104 erfolgt eine Auswahl eines Produkts durch den Benutzer und damit eine Auswahl der Leuchteneinheit oder Gruppe von Leuchteneinheiten basierend auf der Verknüpfung der Produktzuordnung und der Leuchtenadressierung. In einem sechsten Schritt 105 erfolgt eine Ansteuerung der ausgewählten Leuchteneinheit oder Gruppe von Leuchteneinheiten und somit eine optische Hervorhebung des entsprechenden Produkts in dem Regal.

Hinsichtlich der detaillierten Funktion wird weiterhin auf die Ausführungen zu Fig. 1 und Fig. 2 verwiesen.

Die Erfindung ist nicht auf das dargestellte Ausführungsbeispiel beschränkt. Wie bereits angedeutet kann sich das Beleuchtungssystem über mehrere Regale erstrecken. Sogar ein gesamtes Geschäft kann von dem Beleuchtungssystem umfasst sein. Es ist nicht jeweils ein eigenes Bediengerät für jedes Regal notwendig. Auch können neben LED-Modulen verschiedenste Arten von Leuchteneinheiten eingesetzt werden. Alle vorstehend beschriebenen Merkmale oder in den Figuren gezeigten Merkmale sind im Rahmen der Erfindung beliebig vorteilhaft miteinander kombinierbar.

## Patentansprüche

1. Beleuchtungssystem (10), insbesondere Regalbeleuchtungssystem, zum Auffinden von Produkten (40, 41, 42), aufweisend:
- wenigstens zwei Leuchteneinheiten (24-31), wobei jeweils eine Leuchteneinheit (24-31) oder eine definierte Gruppe von Leuchteneinheiten (24-31) einem anderen räumlichen Bereich, insbesondere einer Regalfläche, zugeordnet sind,
- eine Steuereinheit (51) zum Ansteuern der Leuchteneinheiten (24-31), wobei jeder Leuchteneinheit (24-31) oder definierten Gruppe von Leuchteneinheiten (24-31) eine andere Leuchtenadressierung zugeordnet ist, wobei die Leuchtenadressierung jeweils mit einer Produktzuordnung verknüpft ist, die eindeutig einem in dem zugeordneten räumlichen Bereich vorgesehenen Produkt (40, 41, 42) zugeordnet ist, und
- eine Benutzerschnittstelle (54) zur Anzeige der Produktzuordnung und Auswahl der anzusteuernden Leuchteneinheit (24-31) oder definierten Gruppe von Leuchteneinheiten (24-31) über die angezeigte Produktzuordnung,
wobei die wenigstens zwei Leuchteneinheiten (24-31) den zugeordneten räumlichen Bereich beleuchten,
wobei die Steuereinheit (51) ausgebildet ist, um bei Auswahl eines Produkts mittels der Benutzerschnittstelle (54) die gemäß der Produktzuordnung und Leuchtenadressierung zugeordnete Leuchteneinheit (24-31) oder definierte Gruppe von Leuchteneinheiten (24-31) zur optischen Hervorhebung des Produkts in dem Regal anzusteuern,
wobei die Benutzerschnittstelle (54) eine mobile Bedieneinheit (13) aufweist,
wobei die mobile Bedieneinheit (13) zur Anzeige der Produktzuordnung und zur Auswahl der anzusteuernden Leuchteneinheit (24-31) oder definierten Gruppe von Leuchteneinheiten (24-31) über die angezeigte Produktzuordnung ausgebildet ist,
wobei die Steuereinheit (51) ausgebildet ist, um durch modulierte Lichtsignale der zumindest einen Leuchteneinheit (24-31) oder definierten Gruppe von Leuchteneinheiten (24-31) Informationen auszusenden, und
wobei die mobile Bedieneinheit (13) ausgebildet ist, um die modulierten Lichtsignale zu empfangen und die darin enthaltenen Informationen zurückzugewinnen.

2. Beleuchtungssystem (10) nach Anspruch 1,
**dadurch gekennzeichnet,**
**dass** die mobile Bedieneinheit (13) ein Mobiltelefon oder Tablet aufweist und
**dass** die Benutzerschnittstelle (54) eine stationäre Bedieneinheit (50) aufweist, und
**dass** die stationäre Bedieneinheit (50) zur Anzeige der Produktzuordnung und zur Auswahl der anzusteuernden Leuchteneinheit (24-31) oder definierten Gruppe von Leuchteneinheiten (24-31) über die angezeigte Produktzuordnung ausgebildet ist.

3. Beleuchtungssystem (10) nach Anspruch 1 oder 2,
**dadurch gekennzeichnet,**
**dass** die Steuereinheit (51) ausgebildet ist, um bei Auswahl eines Produkts mittels der Benutzerschnittstelle (54) die gemäß der Produktzuordnung und Leuchtenadressierung zugeordnete Leuchteneinheit (24-31) oder definierte Gruppe von Leuchteneinheiten (24-31) anzusteuern, dass diese für einen vorbestimmten Zeitraum mit einer Intensität und/oder einem Blinkmuster und/oder in einer Farbe und/oder mit einem Intensitätswechsel und/oder mit einem Farbwechsel aufleuchtet.

4. Beleuchtungssystem (10) nach einem der Ansprüche 1 bis 3,
**dadurch gekennzeichnet,**
**dass** die Benutzerschnittstelle (54) ausgebildet ist, um gleichzeitig oder nacheinander eine Auswahl eines ersten Produkts (40, 41, 42) durch einen ersten Nutzer und eine Auswahl eines zweiten Produkts (40, 41, 42) durch einen zweiten Nutzer, usw. zu verarbeiten,
**dass** die Steuereinheit (51) hierzu vorzugsweise ausgebildet ist,
- um die gemäß der Produktzuordnung und Leuchtenadressierung dem ersten Produkt (40, 41, 42) zugeordnete Leuchteneinheit (24-31) oder definierte Gruppe von Leuchteneinheiten (24-31) derart anzusteuern, dass diese mit einer ersten Intensität und/oder einem ersten Blinkmuster und/oder in einer ersten Farbe und/oder mit einem ersten Intensitätswechsel und/oder mit einem ersten Farbwechsel für einen ersten vorbestimmten Zeitraum aufleuchtet, und
- um die gemäß der Produktzuordnung und Leuchtenadressierung dem zweiten Produkt (40, 41, 42) zugeordnete Leuchteneinheit (24-31) oder definierte Gruppe von Leuchteneinheiten (24-31) derart anzusteuern, dass diese mit einer zweiten Intensität und/oder einem zweiten Blinkmuster und/oder in einer zweiten Farbe und/oder mit einem zweiten Intensitätswechsel und/oder mit einem zweiten Farbwechsel für einen zweiten vorbestimmten Zeitraum aufleuchtet,
**dass** die erste Farbe und die zweite Farbe unterschiedlich sind, und/oder dass die erste Intensität und die zweite Intensität unterschiedlich sind, und/oder dass das erste Blinkmuster und das zweite Blinkmuster unterschiedlich sind, und/oder dass der erste Intensitätswechsel und der zweite Intensitätswechsel unterschiedlich sind, und/oder
**dass** der erste Farbwechsel und der zweite Farbwechsel unterschiedlich sind, und/oder dass der erste und zweite und eventuell weitere vorbestimmte Zeiträume sich überlappen können oder nacheinander ablaufen.

5. Beleuchtungssystem (10) nach einem der Ansprüche 1 bis 4,
**dadurch gekennzeichnet,**
wobei das Beleuchtungssystem (10) zumindest ein elektronisches Etikett (14-21) aufweist, welches in einer Sichtlinie zu zumindest einer Leuchteneinheit (24-31) oder definierten Gruppe von Leuchteneinheiten (24-31) angebracht ist,
wobei das elektronische Etikett (14-21) ausgebildet ist, um von der Leuchteneinheit (24-31) oder definierten Gruppe von Leuchteneinheiten (24-31) modulierte Lichtsignale zu empfangen,
wobei das elektronische Etikett (14-21) ausgebildet ist, um anhand der modulierten Lichtsignale der zumindest einen Leuchteneinheit (24-31) oder definierten Gruppe von Leuchteneinheiten (24-31) die Information zurückzugewinnen, und
wobei das elektronische Etikett (14-21) ausgebildet ist, um die Information anzuzeigen, und
wobei das elektronische Etikett (14-21) bevorzugt eine Solarzelle aufweist, welche ausgebildet ist, um von der zumindest einen Leuchteneinheit (24-31) oder definierten Gruppe von Leuchteneinheiten (24-31) abgestrahltes Licht zu empfangen und in elektrischen Strom umzusetzen, wobei das elektronische Etikett (14-21) ferner vorzugsweise über keine weitere externe Energiequelle verfügt,
und/oder
wobei die mobile Bedieneinheit (13) ausgebildet ist, um anhand der Informationen zu ermitteln, ob die mobile Bedieneinheit (13) ein Produkt einer ausgewählten Produktzuordnung erreicht hat,
wobei die mobile Bedieneinheit (13) ausgebildet ist, um anzuzeigen, dass die mobile Bedieneinheit (13) das ausgewählte Produkt erreicht hat und/oder um an die Steuereinheit (51) zu übermitteln, dass die mobile Bedieneinheit (13) das ausgewählte Produkt erreicht hat, und
wobei die Steuereinheit (51) ausgebildet ist, um eine Ansteuerung der anzusteuernden Leuchteneinheit (24-31) oder definierten Gruppe von Leuchteneinheiten (24-31) zu beenden, wenn die mobile Bedieneinheit (13) meldet, dass sie das ausgewählte Produkt erreicht hat, und/oder wobei die mobile Bedieneinheit (13) ausgebildet ist, um anhand der empfangenen Informationen eine Richtung und/oder Position des ausgewählten Produkts zu ermitteln, und eine Zielführung zu dem ausgewählten Produkt anzuzeigen.

6. Beleuchtungssystem (10) nach einem der Ansprüche 1 bis 5,
**dadurch gekennzeichnet,**
**dass** das Beleuchtungssystem (10) zumindest einen Sensor aufweist, welcher ausgebildet ist, um zu ermitteln, ob ein Nutzer einen räumlichen Bereich eines Produkts einer ausgewählten Produktzuordnung erreicht hat, und dies an die Steuereinheit (51) zu melden,
**dass** die Steuereinheit (51) ausgebildet ist, um eine Ansteuerung der anzusteuernden Leuchteneinheit (24-31) oder definierten Gruppe von Leuchteneinheiten (24-31) zu beenden, wenn der Sensor meldet, dass der Nutzer den räumlichen Bereich erreicht hat.

7. Beleuchtungssystem (10) nach einem der Ansprüche 1 bis 6,
**dadurch gekennzeichnet,**
**dass** die Steuereinrichtung ausgebildet ist, um die Produktzuordnung basierend
- auf einer manuellen Nutzereingabe mittels der Benutzerschnittstelle, und/oder
- auf einem Einlesen eines auf dem Produkt angebrachten Strichcodes und/oder eines an dem Beleuchtungssystem angebrachten Strichcodes, und/oder
- auf einem Einlesen eines auf dem Produkt angebrachten RFID-Transponders und/oder eines an dem Beleuchtungssystem angebrachten RFID-Transponders,
vorzunehmen.

8. Verfahren zum Bereitstellen eines Beleuchtungssystems (10), insbesondere eines Regalbeleuchtungssystems (10), zum Auffinden von Produkten, aufweisend die Schritte:
- Bereitstellen (100) zumindest zweier Leuchteneinheiten (24-31), wobei jeweils eine Leuchteneinheit (24-31) oder eine definierte Gruppe von Leuchteneinheiten (24-31) einem anderen räumlichen Bereich, insbesondere einer Regalfläche, zugeordnet sind,
- Zuordnen (101) einer Leuchtenadressierung zu jeder Leuchteneinheit (24-31) oder definierten Gruppe von Leuchteneinheiten (24-31) in einer Steuereinheit (51) zum Ansteuern der Leuchteneinheiten (24-31),
- Verknüpfen (102) der Leuchtenadressierung mit einer Produktzuordnung, welche eindeutig einem in dem zugeordneten räumlichen Bereich vorgesehenen Produkt zugeordnet ist, und
- Anzeige (103) der Produktzuordnung über eine Benutzerschnittstelle (54),
wobei die wenigstens zwei Leuchteneinheiten (24-31) den zugeordneten räumlichen Bereich beleuchten,
wobei bei Auswahl eines Produkts (40, 41, 42) mittels der Benutzerschnittstelle (54) die gemäß der Produktzuordnung und Leuchtenadressierung zugeordnete Leuchteneinheit (24-31) oder Gruppe von Leuchteneinheiten (24-31) zur optischen Hervorhebung des Produkts (40, 41, 42) in dem Regal angesteuert wird,
wobei die Benutzerschnittstelle (54) eine mobile Bedieneinheit (13) aufweist,
wobei die mobile Bedieneinheit (13) die Produktzuordnung anzeigt,
wobei mittels der mobilen Bedieneinheit (13) die anzusteuernde Leuchteneinheit (24-31) oder definierten Gruppe von Leuchteneinheiten (24-31) über die angezeigte Produktzuordnung ausgewählt wird,
wobei mittels der zumindest einen Leuchteneinheit (24-31) oder definierten Gruppe von Leuchteneinheiten (24-31) mittels modulierter Lichtsignale Informationen ausgesendet werden, und
wobei die mobile Bedieneinheit (13) die modulierten Lichtsignale empfängt und die darin enthaltenen Informationen zurückgewinnt.

9. Verfahren zum Auffinden eines Produktes, wobei das Verfahren neben den Verfahrensschritten gemäß Anspruch 8 ferner folgende Schritte aufweist:
- Auswahl (104) einer Leuchteneinheit (24-31) oder definierten Gruppe von Leuchteneinheiten (24-31) über die angezeigte Produktzuordnung, und
- Ansteuerung (105) der ausgewählten Leuchteneinheit (24-31) oder definierten Gruppe von Leuchteneinheiten (24-31) mittels der Steuereinheit (51).

10. Verfahren nach Anspruch 8 oder 9,
**dadurch gekennzeichnet,**
**dass** die mobile Bedieneinheit (13) ein Mobiltelefon oder Tablet aufweist und
**dass** die Benutzerschnittstelle (54) eine stationäre Bedieneinheit (50) aufweist, und
**dass** die stationäre Bedieneinheit (50) die Produktzuordnung anzeigt,
**dass** mittels der stationären Bedieneinheit (50) die anzusteuernde Leuchteneinheit (24-31) oder definierten Gruppe von Leuchteneinheiten (24-31) über die angezeigte Produktzuordnung ausgewählt wird.

11. Verfahren nach Anspruch 9 oder 10,
**dadurch gekennzeichnet,**
**dass** bei Auswahl eines Produkts (40, 41, 42) mittels der Benutzerschnittstelle (54) die gemäß der Produktzuordnung und Leuchtenadressierung zugeordnete Leuchteneinheit (24-31) oder Gruppe von Leuchteneinheiten (24-31) angesteuert wird, dass diese für einen vorbestimmten Zeitraum mit einer Intensität und/oder einem Blinkmuster und/oder in einer Farbe und/oder mit einem Intensitätswechsel und/oder mit einem Farbwechsel aufleuchtet.

12. Verfahren nach einem der Ansprüche 8 bis 11,
**dadurch gekennzeichnet,**
**dass** mittels der Benutzerschnittstelle (54) gleichzeitig oder nacheinander eine Auswahl eines ersten Produkts (40, 41, 42) durch einen ersten Nutzer und eine Auswahl eines zweiten Produkts (40, 41, 42) durch einen zweiten Nutzer, usw. durchgeführt wird, wobei dies vorzugsweise durchgeführt wird, indem
die gemäß der Produktzuordnung und Leuchtenadressierung dem ersten Produkt (40, 41, 42) zugeordnete Leuchteneinheit (24-31) oder Gruppe von Leuchteneinheiten (24-31) derart angesteuert wird, dass diese mit einer ersten Intensität und/oder einem ersten Blinkmuster und/oder in einer ersten Farbe und/oder mit einem ersten Intensitätswechsel und/oder mit einem ersten Farbwechsel für einen ersten vorbestimmten Zeitraum aufleuchtet, und
die gemäß der Produktzuordnung und Leuchtenadressierung dem zweiten Produkt (40, 41, 42) zugeordnete Leuchteneinheit (24-31) oder Gruppe von Leuchteneinheiten (24-31) angesteuert wird, dass diese mit einer zweiten Intensität und/oder einem zweiten Blinkmuster und/oder in einer zweiten Farbe und/oder mit einem zweiten Intensitätswechsel und/oder mit einem zweiten Farbwechsel für einen zweiten vorbestimmten Zeitraum aufleuchtet,
die erste Farbe und die zweite Farbe unterschiedlich sind, und/oder die erste Intensität und die zweite Intensität unterschiedlich sind, und/oder das erste Blinkmuster und das zweite Blinkmuster unterschiedlich sind, und/oder der erste Intensitätswechsel und der zweite Intensitätswechsel unterschiedlich sind, und/oder
der erste Farbwechsel und der zweite Farbwechsel unterschiedlich sind, und/oder der erste und zweite und eventuell weitere vorbestimmte Zeiträume sich überlappen können oder nacheinander ablaufen.

13. Verfahren nach einem der Ansprüche 8 bis 12,
**dadurch gekennzeichnet,**
wobei von der zumindest einen Leuchteneinheit (24-31) oder definierten Gruppe von Leuchteneinheiten (24-31) ausgesandte modulierte Lichtsignale von einem elektronischen Etikett (14-21), welches in einer Sichtlinie zu zumindest einer Leuchteneinheit (24-31) oder definierten Gruppe von Leuchteneinheiten (24-31) angebracht ist, empfangen werden, und wobei das elektronische Etikett (14-21) anhand der modulierten Lichtsignale der zumindest einen Leuchteneinheit (24-31) oder Gruppe von Leuchteneinheiten (24-31) die Informationen zurückgewinnt, und wobei das elektronische Etikett (14-21) die Information anzeigt, und
wobei das elektronische Etikett (14-21) vorzugsweise mittels einer Solarzelle von der zumindest einen Leuchteneinheit (24-31) oder definierten Gruppe von Leuchteneinheiten (24-31) abgestrahltes Licht empfängt und in elektrischen Strom umsetzt, und
das elektronische Etikett (14-21) ferner vorzugsweise über keine weitere externe Energiequelle verfügt,
und/oder
wobei die mobile Bedieneinheit (13) anhand der Informationen ermittelt, ob die mobile Bedieneinheit (13) ein Produkt einer ausgewählten Produktzuordnung erreicht hat,
wobei die mobile Bedieneinheit (13) anzeigt, dass die mobile Bedieneinheit (13) das ausgewählte Produkt erreicht hat und/oder an die Steuereinheit (51) übermitteln, dass die mobile Bedieneinheit (13) das ausgewählte Produkt erreicht hat, und
wobei die Steuereinheit (51) eine Ansteuerung der anzusteuernden Leuchteneinheit (24-31) oder definierten Gruppe von Leuchteneinheiten (24-31) beendet, wenn die mobile Bedieneinheit (13) meldet, dass sie das ausgewählte Produkt erreicht hat, und/oder
wobei die mobile Bedieneinheit (13) anhand der empfangenen Informationen eine Richtung und/oder Position des ausgewählten Produkts ermittelt, und eine Zielführung zu dem ausgewählten Produkt anzeigt.

14. Verfahren nach einem der Ansprüche 8 bis 13,
**dadurch gekennzeichnet,**
das mittels eines Sensors des Beleuchtungssystems (10) ermitteln wird, ob ein Nutzer einen räumlichen Bereich eines Produkts einer ausgewählten Produktzuordnung erreicht hat, und dass dies an die Steuereinheit (51) gemeldet wird,
dass die Steuereinheit (51) eine Ansteuerung der anzusteuernden Leuchteneinheit (24-31) oder definierten Gruppe von Leuchteneinheiten (24-31) beendet, wenn der Sensor meldet, dass der Nutzer den räumlichen Bereich erreicht hat.

15. Verfahren nach einem der Ansprüche 8 bis 14,
**dadurch gekennzeichnet,**
**dass** die Steuereinrichtung die Produktzuordnung basierend
- auf einer manuellen Nutzereingabe mittels der Benutzerschnittstelle, und/oder
- auf einem Einlesen eines auf dem Produkt angebrachten Strichcodes und/oder eines an dem Beleuchtungssystem angebrachten Strichcodes, und/oder
- auf einem Einlesen eines auf dem Produkt angebrachten RFID-Transponders und/oder eines an dem Beleuchtungssystem angebrachten RFID-Transponders,
vornimmt.

## Claims

1. Lighting system (10), in particular a shelf lighting system, for locating products (40, 41, 42), comprising:
- at least two lamp units (24-31), wherein respectively one lamp unit (24-31) or one defined group of lamp units (24-31) is associated with a different spatial region, in particular a shelf area,
- a control unit (51) for controlling the lamp units (24-31), wherein a different lamp addressing is associated with each lamp unit (24-31) or defined group of lamp units (24-31), wherein the lamp addressing is respectively linked to a product association, which is uniquely associated with a product (40, 41, 42) provided in the associated spatial region, and
- a user interface (54) for displaying the product association and selecting the lamp unit (24-31) or defined group of lamp units (24-31) to be controlled via the displayed product association,
wherein the at least two lamp units (24-31) illuminate the associated spatial region,
wherein the control unit (51) is designed to control the lamp unit (24-31) or defined group of lamp units (24-31) associated according to the product association and lamp addressing in order to visually highlight the product on the shelf when a product is selected by means of the user interface (54),
wherein the user interface (54) comprises a mobile operating unit (13),
- wherein the mobile operating unit (13) is designed for displaying the product association, and selecting the lamp unit (24-31) or defined group of lamp units (24-31) to be controlled, via the displayed product association,
wherein the control unit (51) is designed to emit information via modulated light signals of the at least one lamp unit (24-31) or defined group of lamp units (24-31), and
wherein the mobile operating unit (13) is designed to receive the modulated light signals and to retrieve the information contained therein.

2. Lighting system (10) according to claim 1,
**characterized in that**
the mobile operating unit (13) comprises a mobile telephone or tablet, and
the user interface (54) comprises a stationary operating unit (50), and
the stationary operating unit (50) is designed for displaying the product association and selecting the lamp unit (24-31) or defined group of lamp units (24-31) to be controlled via the displayed product association.

3. Lighting system (10) according to claim 1 or 2,
**characterized in that**
the control unit (51) is designed to control the lamp unit (24-31) or defined group of lamp units (24-31) associated according to the product association and lamp addressing when a product is selected by means of the user interface (54), such that it lights up for a predetermined time period with an intensity and/or with a flashing pattern and/or in a color and/or with an intensity change and/or with a color change.

4. Lighting system (10) according to one of claims 1 to 3,
**characterized in that**
the user interface (54) is designed to simultaneously or successively process a selection of a first product (40, 41, 42) by a first user and a selection of a second product (40, 41, 42) by a second user, etc.,
for this purpose, the control unit (51) is preferably designed to
- control the lamp unit (24-31) or defined group of lamp units (24-31) associated with the first product (40, 41, 42) according to the product association and lamp addressing in such a way that it lights up with a first intensity and/or with a first flashing pattern and/or in a first color and/or with a first intensity change and/or with a first color change for a first predetermined time period, and
- control the lamp unit (24-31) or defined group of lamp units (24-31) associated with the second product (40, 41, 42) according to the product association and lamp addressing in such a way that it lights up with a second intensity and/or with a second flashing pattern and/or in a second color and/or with a second intensity change and/or with a second color change for a second predetermined time period, the first color and the second color are different, and/or
the first intensity and the second intensity are different, and/or
the first flashing pattern and the second flashing pattern are different, and/or the first intensity change and the second intensity change are different, and/or
the first color change and the second color change are different, and/or the first and the second and possibly further predetermined time periods may overlap or proceed successively.

5. Lighting system (10) according to one of claims 1 to 4,
**characterized in that**
wherein the lighting system (10) comprises at least one electronic label (14-21), which is mounted in a line of sight to at least one lamp unit (24-31) or defined group of lamp units (24-31),
wherein the electronic label (14-21) is designed to receive light signals modulated by the lamp unit (24-31) or defined group of lamp units (24-31),
wherein the electronic label (14-21) is designed to retrieve the information on the basis of the modulated light signals of the at least one lamp unit (24-31) or defined group of lamp units (24-31), and
wherein the electronic label (14-21) is designed to display the information, and
wherein the electronic label (14-21) preferably comprises a solar cell, which is designed to receive light emitted by the at least one lamp unit (24-31) or defined group of lamp units (24-31) and convert it into electric current, wherein the electronic label (14-21) furthermore preferably has no further external energy source,
and/or
wherein the mobile operating unit (13) is designed to ascertain, on the basis of the information, whether the mobile operating unit (13) has reached a product of a selected product association,
wherein the mobile operating unit (13) is designed to indicate that the mobile operating unit (13) has reached the selected product, and/or to communicate to the control unit (51) that the mobile operating unit (13) has reached the selected product, and
wherein the control unit (51) is designed to terminate a control of the lamp unit (24-31) or defined group of lamp units (24-31) to be controlled when the mobile operating unit (13) reports that it has reached the selected product, and/or
wherein the mobile operating unit (13) is designed to ascertain a direction and/or position of the selected product on the basis of the received information, and to display a route guidance to the selected product.

6. Lighting system (10) according to one of claims 1 to 5,
**characterized in that**
the lighting system (10) comprises at least one sensor, which is designed to ascertain whether a user has reached a spatial region of a product of a selected product association, and to report this to the control unit (51),
the control unit (51) is designed to terminate a control of the lamp unit (24-31) or defined group of lamp units (24-31) to be controlled when the sensor reports that the user has reached the spatial region.

7. Lighting system (10) according to one of claims 1 to 6,
**characterized in that**
the control device is designed to perform the product association based
- on a manual user input by means of the user interface, and/or
- on reading in a barcode attached to the product and/or a barcode attached to the lighting system, and/or
- on reading in an RFID transponder attached to the product and/or an RFID transponder attached to the lighting system.

8. Method for providing a lighting system (10), in particular a shelf lighting system (10), for locating products, comprising the steps of:
- providing (100) at least two lamp units (24-31), wherein respectively one lamp unit (24-31) or one defined group of lamp units (24-31) is associated with a different spatial region, in particular a shelf area,
- associating (101) a lamp addressing to each lamp unit (24-31) or defined group of lamp units (24-31) in a control unit (51) for controlling the lamp units (24-31),
- linking (102) the lamp addressing with a product association, which is uniquely associated with a product provided in the associated spatial region, and
- displaying (103) the product association via a user interface (54),
wherein the at least two lamp units (24-31) illuminate the associated spatial region,
wherein the lamp unit (24-31) or group of lamp units (24-31) associated according to the product association and lamp addressing is controlled to visually highlight the product (40, 41, 42) on the shelf when a product (40, 41, 42) is selected by means of the user interface (54),
wherein the user interface (54) comprises a mobile operating unit (13), wherein the mobile operating unit (13) displays the product association, wherein the lamp unit (24-31) or defined group of lamp units (24-31) to be controlled is selected by means of the mobile operating unit (13) via the displayed product association,
wherein information is emitted by means of the at least one lamp unit (24-31) or defined group of lamp units (24-31) by means of modulated light signals, and
wherein the mobile operating unit (13) receives the modulated light signals and retrieves the information contained therein.

9. Method for locating a product, wherein, in addition to the method steps according to claim 8, the method furthermore comprises the steps of:
- selecting (104) a lamp unit (24-31) or defined group of lamp units (24-31) via the displayed product association, and
- controlling (105) the selected lamp unit (24-31) or defined group of lamp units (24-31) by means of the control unit (51).

10. Method according to claim 8 or 9,
**characterized in that**
the mobile operating unit (13) comprises a mobile telephone or tablet, and the user interface (54) comprises a stationary operating unit (50), and
the stationary operating unit (50) displays the product association,
the lamp unit (24-31) or defined group of lamp units (24-31) to be controlled is selected by means of the stationary operating unit (50) via the displayed product association.

11. Method according to claim 9 or 10,
**characterized in that**
when a product (40, 41, 42) is selected by means of the user interface (54), the lamp unit (24-31) or group of lamp units (24-31) associated according to the product association and lamp addressing is controlled such that it lights up for a predetermined time period with an intensity and/or with a flashing pattern and/or in a color and/or with an intensity change and/or with a color change.

12. Method according to one of claims 8 to 11,
**characterized in that**
a selection of a first product (40, 41, 42) by a first user and a selection of a second product (40, 41, 42) by a second user, etc. are performed simultaneously or successively by means of the user interface (54), wherein this is preferably implemented **in that**
the lamp unit (24-31) or group of lamp units (24-31) associated with the first product (40, 41, 42) according to the product association and lamp addressing is controlled in such a way that it lights up with a first intensity and/or with a first flashing pattern and/or in a first color and/or with a first intensity change and/or with a first color change for a first predetermined time period, and
the lamp unit (24-31) or group of lamp units (24-31) associated with the second product (40, 41, 42) according to the product association and lamp addressing is controlled such that it lights up with a second intensity and/or with a second flashing pattern and/or in a second color and/or with a second intensity change and/or with a second color change for a second predetermined time period,
the first color and the second color are different, and/or
the first intensity and the second intensity are different, and/or
the first flashing pattern and the second flashing pattern are different, and/or the first intensity change and the second intensity change are different, and/or
the first color change and the second color change are different, and/or the first and the second and possibly further predetermined time periods may overlap or proceed successively.

13. Method according to one of claims 8 to 12,
**characterized in that**
wherein modulated light signals emitted by the at least one lamp unit (24-31) or defined group of lamp units (24-31) are received by an electronic label (14-21), which is mounted in a line of sight to at least one lamp unit (24-31) or defined group of lamp units (24-31), and wherein the electronic label (14-21) retrieves the information on the basis of the modulated light signals of the at least one lamp unit (24-31) or group of lamp units (24-31), and
wherein the electronic label (14-21) displays the information, and wherein the electronic label (14-21) preferably receives, by means of a solar cell, light emitted by the at least one lamp unit (24-31) or defined group of lamp units (24-31) and converts it into electric current, and
the electronic label (14-21) furthermore preferably has no further external energy source,
and/or
wherein the mobile operating unit (13) ascertains, on the basis of the information, whether the mobile operating unit (13) has reached a product of a selected product association,
wherein the mobile operating unit (13) indicates that the mobile operating unit (13) has reached the selected product, and/or communicates to the control unit (51) that the mobile operating unit (13) has reached the selected product, and
wherein the control unit (51) terminates a control of the lamp unit (24-31) or defined group of lamp units (24-31) to be controlled when the mobile operating unit (13) reports that it has reached the selected product, and/or
wherein the mobile operating unit (13) ascertains a direction and/or position of the selected product on the basis of the received information, and displays a route guidance to the selected product.

14. Method according to one of claims 8 to 13,
**characterized in that**
it is ascertained by means of a sensor of the lighting system (10) whether a user has reached a spatial region of a product of a selected product association, and
this is reported to the control unit (51),
the control unit (51) terminates a controlling of the lamp unit (24-31) or defined group of lamp units (24-31) to be controlled when the sensor reports that the user has reached the spatial region.

15. Method according to one of claims 8 to 14,
**characterized in that**
the control device carries out the product association based
- on a manual user input by means of the user interface, and/or
- on reading in a barcode attached to the product and/or a barcode attached to the lighting system, and/or
- on reading in an RFID transponder attached to the product and/or an RFID transponder attached to the lighting system.

## Revendications

1. Système d'éclairage (10), en particulier système d'éclairage d'étagère, servant à localiser des produits (40, 41, 42), présentant :
- au moins deux unités luminaires (24-31), une unité luminaire (24-31) ou un groupe défini d'unités luminaires (24-31) étant respectivement associé(e) à une zone spatiale différente, en particulier à un linéaire,
- une unité de commande (51) servant à commander les unités luminaires (24-31), un adressage de luminaire différent étant associé à chaque unité luminaire (24-31) ou groupe défini d'unités luminaires (24-31), l'adressage de luminaire étant lié respectivement à une association de produit qui est associée de manière univoque à un produit (40, 41, 42) prévu dans la zone spatiale associée et
- une interface utilisateur (54) servant à afficher l'association de produit et à sélectionner l'unité luminaire (24-31) ou le groupe défini d'unités luminaires (24-31) à commander par l'intermédiaire de l'association de produit affichée,
les au moins deux unités luminaires (24-31) éclairant la zone spatiale associée,
l'unité de commande (51) étant conçue pour commander, lors de la sélection d'un produit au moyen de l'interface utilisateur (54), l'unité luminaire (24-31) ou le groupe défini d'unités luminaires (24-31) associé(e) conformément à l'association de produit et à l'adressage de luminaire pour la mise en évidence optique du produit dans l'étagère,
l'interface utilisateur (54) présentant une unité d'actionnement mobile (13), l'unité d'actionnement mobile (13) étant conçue pour afficher l'association de produit et pour sélectionner l'unité luminaire (24-31) ou le groupe défini d'unités luminaires (24-31) à commander par l'intermédiaire de l'association de produit affichée,
l'unité de commande (51) étant conçue pour envoyer des informations par le biais de signaux de lumière modulés de l'au moins une unité luminaire (24-31) ou du groupe défini d'unités luminaires (24-31) et
l'unité d'actionnement mobile (13) étant conçue pour recevoir les signaux de lumière modulés et pour récupérer les informations contenues dans ceux-ci.

2. Système d'éclairage (10) selon la revendication 1,
**caractérisé en ce**
**que** l'unité d'actionnement mobile (13) présente un téléphone mobile ou une tablette et
**que** l'interface utilisateur (54) présente une unité d'actionnement fixe (50) et **que** l'unité d'actionnement fixe (50) est conçue pour afficher l'association de produit et pour sélectionner l'unité luminaire (24-31) ou le groupe défini d'unités luminaires (24-31) à commander par l'intermédiaire de l'association de produit affichée.

3. Système d'éclairage (10) selon la revendication 1 ou 2,
**caractérisé en ce**
**que** l'unité de commande (51) est conçue pour, lors de la sélection d'un produit au moyen de l'interface utilisateur (54), commander l'unité luminaire (24-31) ou le groupe défini d'unités luminaires (24-31) associé(e) conformément à l'association de produit et à l'adressage de luminaire, pour que celle-ci ou celui-ci éclaire, pendant une durée prédéfinie avec une intensité et/ou une séquence de clignotement et/ou dans une couleur et/ou avec un changement d'intensité et/ou avec un changement de couleur.

4. Système d'éclairage (10) selon l'une quelconque des revendications 1 à 3,
**caractérisé en ce**
**que** l'interface utilisateur (54) est conçue pour traiter simultanément ou successivement une sélection d'un premier produit (40, 41, 42) par un premier utilisateur et une sélection d'un deuxième produit (40, 41, 42) par un deuxième utilisateur et ainsi de suite,
**que** l'unité de commande (51) est dans ce but conçue de préférence
- pour commander l'unité luminaire (24-31) ou le groupe défini d'unités luminaires (24-31) associé(e) au premier produit (40, 41, 42) conformément à l'association de produit et à l'adressage de luminaire, de sorte que celle-ci ou celui-ci éclaire avec une première intensité et/ou une première séquence de clignotement et/ou dans une première couleur et/ou avec un premier changement d'intensité et/ou avec un premier changement de couleur pendant une première période prédéfinie et
- pour commander l'unité luminaire (24-31) ou le groupe défini d'unités luminaires (24-31) associé(e) au deuxième produit (40, 41, 42) conformément à l'association de produit et à l'adressage de luminaire, de sorte que celle-ci ou celui-ci éclaire avec une deuxième intensité et/ou une deuxième séquence de clignotement et/ou dans une deuxième couleur et/ou avec un deuxième changement d'intensité et/ou avec un deuxième changement de couleur pendant une deuxième période prédéfinie,
**que** la première couleur et la deuxième couleur sont différentes et/ou
**que** la première intensité et la deuxième intensité sont différentes et/ou
**que** la première séquence de clignotement et la deuxième séquence de clignotement sont différentes et/ou
**que** le premier changement d'intensité et le deuxième changement d'intensité sont différents et/ou
**que** le premier changement de couleur et le deuxième changement de couleur sont différents et/ou
**que** les première et deuxième et éventuellement d'autres périodes prédéfinies peuvent se chevaucher ou avoir lieu l'une après l'autre.

5. Système d'éclairage (10) selon l'une quelconque des revendications 1 à 4, **caractérisé en ce**
**que** dans lequel le système d'éclairage (10) présente au moins une étiquette électronique (14-21), qui est appliquée dans une ligne de visée par rapport à au moins une unité luminaire (24-31) ou au groupe défini d'unités luminaires (24-31),
dans lequel l'étiquette électronique (14-21) est conçue pour recevoir de l'unité luminaire (24-31) ou du groupe défini d'unités luminaires (24-31) des signaux de lumière modulés,
dans lequel l'étiquette électronique (14 -21) est conçue pour récupérer les informations par le biais des signaux de lumière modulés de l'au moins une unité luminaire (24-31) ou un groupe défini d'unités luminaires (24-31) et
dans lequel l'étiquette électronique (14-21) est conçue pour afficher les informations et
dans lequel l'étiquette électronique (14-21) présente de préférence une cellule solaire, laquelle est conçue pour recevoir la lumière émise par l'au moins une unité luminaire (24-31) ou un groupe défini d'unités luminaires (24-31) et la convertir en courant électrique, dans lequel l'étiquette électronique (14-21) ne dispose en outre de préférence d'aucune autre source d'énergie externe,
et/ou
dans lequel l'unité d'actionnement mobile (13) est conçue pour déterminer, au moyen des informations, si l'unité d'actionnement mobile (13) a atteint un produit d'une association de produit sélectionnée,
dans lequel l'unité d'actionnement mobile (13) est conçue pour afficher que l'unité d'actionnement mobile (13) a atteint le produit sélectionné et/ou pour
communiquer à l'unité de commande (51) que l'unité d'actionnement mobile (13) a atteint le produit sélectionné et
dans lequel l'unité de commande (51) est conçue pour mettre fin à une commande de l'unité luminaire (24-31) ou du groupe défini d'unités luminaires (24-31) à commander lorsque l'unité d'actionnement mobile (13) signale qu'elle a atteint le produit sélectionné et/ou
dans lequel l'unité d'actionnement mobile (13) est conçue pour déterminer, à l'aide des informations reçues, une direction et/ou une position du produit sélectionné et pour afficher un guidage vers le produit sélectionné.

6. Système d'éclairage (10) selon l'une quelconque des revendications 1 à 5, **caractérisé en ce**
**que** le système d'éclairage (10) présente au moins un capteur, lequel est conçu pour déterminer si un utilisateur a atteint une zone spatiale d'un produit d'une association de produit sélectionnée et pour le signaler à l'unité de commande (51),
**que** l'unité de commande (51) est conçue pour mettre fin à une commande de l'unité luminaire (24-31) ou du groupe défini d'unités luminaires (24-31) à commander, lorsque le capteur signale que l'utilisateur a atteint la zone spatiale.

7. Système d'éclairage (10) selon l'une quelconque des revendications 1 à 6,
**caractérisé en ce**
**que** le dispositif de commande est conçu pour effectuer l'association de produit sur la base
- d'une saisie manuelle d'utilisateur au moyen de l'interface utilisateur et/ou
- d'une lecture d'un code à barres appliqué sur le produit et/ou d'un code à barres appliqué sur le système d'éclairage et/ou
- d'une lecture d'un transpondeur RFID appliqué sur le produit et/ou d'un transpondeur RFID appliqué sur le système d'éclairage.

8. Procédé de fourniture d'un système d'éclairage (10), en particulier d'un système d'éclairage d'étagère (10), pour localiser des produits, présentant les étapes de :
- fourniture (100) d'au moins deux unités luminaires (24-31), une unité luminaire (24-31) ou un groupe défini d'unités luminaires (24-31) étant respectivement associé(e) à une zone spatiale différente, en particulier à un linéaire,
- association (101) d'un adressage de luminaire à chaque unité luminaire (24-31) ou groupe défini d'unités luminaires (24-31) dans une unité de commande (51) pour la commande des unités luminaires (24-31),
- liaison (102) de l'adressage de luminaire à une association de produit, laquelle est associée de manière univoque à un produit prévu dans la zone spatiale associée et
- affichage (103) de l'association de produit par le biais d'une interface utilisateur (54),
les au moins deux unités luminaires (24-31) éclairant la zone spatiale associée,
lors de la sélection d'un produit (40, 41, 42) au moyen de l'interface utilisateur (54), l'unité luminaire (24-31) ou le groupe d'unités luminaires (24-31) associé(e) conformément à l'association de produit et à l'adressage de luminaire étant commandé(e) pour la mise en évidence optique du produit (40, 41, 42) dans l'étagère,
l'interface utilisateur (54) présentant une unité d'actionnement mobile (13), l'unité d'actionnement mobile (13) affichant l'association de produit,
au moyen de l'unité d'actionnement mobile (13), l'unité luminaire (24-31) ou le groupe défini d'unités luminaires (24-31) à commander étant sélectionné(e) par l'intermédiaire de l'association de produit affichée,
au moyen de l'au moins une unité luminaire (24-31) ou du groupe défini d'unités luminaires (24-31), des informations étant envoyées au moyen de signaux de lumière modulés et
l'unité d'actionnement mobile (13) recevant les signaux de lumière modulés et récupérant les informations contenues dans ceux-ci.

9. Procédé pour la localisation d'un produit, le procédé présentant en outre, en plus des étapes de procédé selon la revendication 8, les étapes suivantes de :
- sélection (104) d'une unité luminaire (24-31) ou du groupe défini d'unités luminaires (24-31) par l'intermédiaire de l'association de produit affichée et
- commande (105) de l'unité luminaire (24-31) ou du groupe défini d'unités luminaires (24-31) au moyen de l'unité de commande (51).

10. Procédé selon la revendication 8 ou 9,
**caractérisé en ce**
**que** l'unité d'actionnement mobile (13) présente un téléphone mobile ou une tablette et
**que** l'interface utilisateur (54) présente une unité d'actionnement fixe (50) et **que** l'unité d'actionnement fixe (50) affiche l'association de produit,
**que** au moyen de l'unité d'actionnement fixe (50), l'unité luminaire (24-31) ou le groupe défini d'unités luminaires (24-31) à commander est sélectionné(e) par l'intermédiaire de l'association de produit affichée.

11. Procédé selon la revendication 9 ou 10,
**caractérisé en ce**
**que** lors de la sélection d'un produit (40, 41, 42) au moyen de l'interface utilisateur (54), l'unité luminaire (24-31) ou le groupe d'unités luminaires (24-31) associé(e) conformément à l'association de produit et à l'adressage de luminaire est commandé(e) pour que celle-ci ou celui-ci éclaire, pendant une période prédéfinie, avec une intensité et/ou une séquence de clignotement et/ou dans une couleur et/ou avec un changement d'intensité et/ou avec un changement de couleur.

12. Procédé selon l'une quelconque des revendications 8 à 11,
**caractérisé en ce**
**que,** au moyen de l'interface utilisateur (54), une sélection d'un premier produit (40, 41, 42) par un premier utilisateur et une sélection d'un deuxième produit (40, 41, 42) par un deuxième utilisateur et ainsi de suite, sont réalisées, cela étant de préférence réalisé en ce que
l'unité luminaire (24-31) ou le groupe d'unités luminaires (24-31) associé(e) au premier produit (40, 41, 42) conformément à l'association de produit et à l'adressage de luminaire est commandé(e) de sorte que celle-ci ou celui-ci éclaire pendant une première période prédéfinie avec une première intensité et/ou une première séquence de clignotement et/ou dans une première couleur et/ou avec un premier changement d'intensité et/ou avec un premier changement de couleur et
l'unité luminaire (24-31) ou le groupe d'unités luminaires (24-31) associé(e) au premier produit (40, 41, 42) conformément à l'association de produit et à l'adressage de luminaire est commandé(e) de sorte que celle-ci ou celui-ci éclaire pendant une deuxième période prédéfinie avec une deuxième intensité et/ou une deuxième séquence de clignotement et/ou dans une deuxième couleur et/ou avec un deuxième changement d'intensité et/ou avec un deuxième changement de couleur,
la première couleur et la deuxième couleur sont différentes et/ou la première intensité et la deuxième intensité sont différentes et/ou
la première séquence de clignotement et la deuxième séquence de clignotement sont différentes et/ou
le premier changement d'intensité et le deuxième changement d'intensité sont différents et/ou
le premier changement de couleur et le deuxième changement de couleur sont différents et/ou
les première et deuxième et éventuellement d'autres périodes prédéfinies peuvent se chevaucher ou avoir lieu l'une après l'autre.

13. Procédé selon l'une quelconque des revendications 8 à 12,
**caractérisé en ce**
**que**, dans lequel les signaux de lumière modulés envoyés par l'au moins une unité luminaire (24-31) ou un groupe défini d'unités luminaires (24-31) sont reçus par une étiquette électronique (14-21) qui est appliquée dans une ligne de visée par rapport à au moins une unité luminaire (24-31) ou au groupe défini d'unités luminaires (24-31) et dans lequel l'étiquette électronique (14-21) récupère les informations à l'aide des signaux de lumière modulés de l'au moins une unité luminaire (24-31) ou un groupe d'unités luminaires (24-31), et
dans lequel l'étiquette électronique (14-21) affiche les informations et dans lequel l'étiquette électronique (14-21) reçoit, de préférence au moyen d'une cellule solaire, la lumière émise par l'au moins une unité luminaire (24-31) ou un groupe défini d'unités luminaires (24-31) et la convertit en courant électrique et
l'étiquette électronique (14-21) ne dispose en outre d'aucune autre source d'énergie externe,
et/ou
dans lequel l'unité d'actionnement mobile (13) détermine, au moyen des informations, si l'unité d'actionnement mobile (13) a atteint un produit d'une association de produit sélectionnée,
dans lequel l'unité d'actionnement mobile (13) affiche que l'unité d'actionnement mobile (13) a atteint le produit sélectionné et/ou communique à l'unité de commande (51) que l'unité d'actionnement mobile (13) a atteint le produit sélectionné et
dans lequel l'unité de commande (51) met fin à une commande de l'unité luminaire (24-31) ou du groupe défini d'unités luminaires (24-31) à commander lorsque l'unité d'actionnement mobile (13) signale qu'elle a atteint le produit sélectionné et/ou
dans lequel l'unité d'actionnement mobile (13) détermine, à l'aide des informations reçues, une direction et/ou une position du produit sélectionné et affiche un guidage vers le produit sélectionné.

14. Procédé selon l'une quelconque des revendications 8 à 13,
**caractérisé en ce**
**que,** au moyen d'un capteur du système d'éclairage (10), il est déterminé si un utilisateur a atteint une zone spatiale d'un produit d'une association de produit sélectionnée et
**que** cela est signalé à l'unité de commande (51),
**que** l'unité de commande (51) met fin à une commande de l'unité luminaire (24-31) ou du groupe défini d'unités luminaires (24-31) à commander, lorsque le capteur signale que l'utilisateur a atteint la zone spatiale.

15. Procédé selon l'une quelconque des revendications 8 à 14,
**caractérisé en ce**
**que** le dispositif de commande effectue l'association de produit sur la base
- d'une saisie manuelle d'utilisateur au moyen de l'interface utilisateur et/ou
- d'une lecture d'un code à barres appliqué sur le produit et/ou d'un code à barres appliqué sur le système d'éclairage et/ou
- d'une lecture d'un transpondeur RFID appliqué sur le produit et/ou d'un transpondeur RFID appliqué sur le système d'éclairage.
